# NOUVEAU FASCICULE DE BREVET EUROPEEN

(11) **EP 0 962 429 B2**
(45) Date de publication et mention de la décision concernant l'opposition: **11.01.2012**
(45) Mention de la délivrance du brevet: 27.08.2003
(21) Numéro de dépôt: 99401345.6
(22) Date de dépôt: 04.06.1999
(51) Int. Cl.: C03C 17/36

(54) **Vitrage muni d'un empilement de couches réfléchissant métallique**
Glasscheibe beschichtet mit reflektierenden Metall-Schichten
Glazing coated with a stack of reflecting metallic layers

(30) Priorité: 06.06.1998 DE 19825424
(43) Date de publication de la demande: 08.12.1999
(73) Titulaire: SAINT-GOBAIN GLASS FRANCE, 92400 Courbevoie (FR)
(72) Inventeur: Schicht, Heinz, 06925 Bethau (DE); Kaiser, Wilfried, 04860 Torgau (DE); Schmidt, Uwe, 04895 Falkenberg/Elster (DE); Leuteritz, Reiner, 04860 Torgau (DE); Schindler, Herbert, 04860 Torgau (DE)
(74) Mandataire: Teyssedre, Laurent

(56) Documents cités:
- EP-A- 0 224 704
- EP-A- 0 678 483
- EP-A1- 0 747 329
- EP-A1- 0 779 255
- EP-A2- 0 224 704
- EP-A2- 0 718 250
- WO-A-97/31872
- FR-A- 2 679 578
- GB-A- 2 262 749
- GB-A- 2 262 749
- US-A- 3 682 528
- US-A- 4 048 039
- US-A- 4 992 087
- US-A- 5 543 229
- US-A- 5 552 180
- US-A- 5 688 585
- CHEMICAL ABSTRACTS, vol. 111, no. 2, 10 juillet 1989 (1989-07-10) Columbus, Ohio, US; abstract no. 11542q, page 271; XP000059843 & JP 63 242948 A (ASAHI GLASS CO. LTD.) 7 octobre 1988 (1988-10-07)
- 'CIE L*a*b* Color Scale' HUNTERLAB 1996,
- 'DIN 5033 - "Farbmessung"'

## Description

La présente invention concerne un vitrage comportant un empilement de couches d'aspect métallique réfléchissant et apte à supporter des traitements thermiques du type recuit, bombage, trempe thermique. Il comporte une couche de base en diélectrique (notamment obtenue par voie d'oxydation), une couche essentiellement métallique hautement réfléchissante et une couche de recouvrement extérieure en diélectrique (notamment non obtenue par voie d'oxydation).

L'invention utilise plus particulièrement le mode de dépôt de couches de pulvérisation cathodique, notamment assistée par champ magnétique (et en courant continu ou alternatif), les oxydes ou nitrures étant déposés à partir de cibles de métal ou d'alliage ou de Si appropriées, dans des conditions oxydantes (la « voie d'oxydation » mentionnée plus haut) ou nitrurantes.

Les vitrages revêtus par un empilement de couches possédant cette structure fondamentale sont connus dans différentes formes de réalisation. Dans la majorité des cas, il s'agit d'empilements de couches partiellement réfléchissants, c'est-à-dire d'empilements de couches avec une transmission plus ou moins élevée dans le visible. De tels vitrages trouvent principalement une application comme vitrages pour fenêtres réfléchissant la chaleur. Dans de tels cas, les couches se trouvent en règle générale sur une face intérieure d'un vitrage isolant. Elles sont pour cette raison protégées d'une attaque directe par des constituants atmosphériques et ne doivent pas présenter des exigences particulièrement élevées quant à leur stabilité chimique et mécanique.

Dans d'autres cas d'utilisation, par exemple pour le revêtement de murs ou de façades, la transparence du système de couches passe plutôt au second plan; pour des raisons d'esthétique, l'accent est mis ici davantage sur les propriétés réfléchissantes de l'empilement de couches. Dans de nombreux cas, on souhaite une réflexion d'aspect métallique, mais on préfère cependant souvent une réflexion atténuée avec une transmission de lumière très réduite. Des empilements de couches très réfléchissants possédant ces propriétés optiques sont particulièrement intéressants sur le plan esthétique. Lorsque des vitrages possédant de tels empilements de couches sont utilisés pour le revêtement de murs ou de façades, ils sont souvent mis en oeuvre sous la forme de vitrages monolithiques, de sorte que la couche de surface de l'empilement est directement ou indirectement exposée à l'atmosphère. De tels vitrages doivent souvent également être trempés par voie thermique pour des raisons de sécurité et/ou pour augmenter leur résistance à la flexion et aux chocs. Les vitrages revêtus sont dans ce cas réchauffés à une température supérieure à 600°C puis brusquement refroidis. L'empilement de couches réfléchissant doit pour cette raison également supporter ce processus de trempe sans aucun dommage, sans dégrader notablement les propriétés intéressantes évoquées plus haut.

L'invention a pour but de développer un empilement de couches réfléchissant d'aspect métallique ayant une réflexion lumineuse R_{L} du verre supérieure à 50% et une transmission lumineuse T_{L} de 2-15%, et de préférence de 4-10%, avec une résistance à la corrosion élevée et une stabilité thermique élevée, qui puisse permettre une trempe thermique des vitrages revêtus, et qui résiste également en tant que tel pendant de longues périodes de temps à des conditions atmosphériques défavorables.

L'invention a pour objet un vitrage selon la revendication 1.

Les empilements de couches suivant l'invention remplissent dans une large mesure toutes les exigences citées, le résultat souhaité se produisant par l'action combinée des différentes couches de l'empilement. Une des fonctions possibles de la couche de base, notamment celle obtenue par oxydation, (c'est-à-dire par pulvérisation cathodique, notamment assistée par champ magnétique, à partir de cibles de métal ou de Si en atmosphère réactive oxydante) est de servir de couche de « condensation», « de mouillage» ou encore de « nucléation» appropriée pour la couche métallique à déposer par-dessus. Du fait que la couche métallique doit présenter une transmission faible, elle doit en effet se déposer, se napper de façon particulièrement uniforme sur la couche de base. Il a été montré que cette condition est particulièrement bien remplie avec les couches de base (notamment celles de type oxyde) suivant l'invention, car l'alliage métallique se condense sur ce support de façon particulièrement homogène, sans qu'il ne se produise de séparation, de « démouillage», de délamination, ce qui n'est pas toujours le cas avec d'autres couches de base ainsi qu'avec des surfaces de verre hétérogènes.

Une importance particulière est accordée à la composition de l'alliage métallique. Dans les compositions suivant l'invention, les couches métalliques présentent d'une part les propriétés de réflexion souhaitées et une brillance élevée. D'autre part, le métal ou les alliages à base de métal cités sont en tant que tels déjà très résistants à la corrosion. Il est cependant particulièrement important que les éléments Cr, Al et Si constituent, lors de l'application de la couche de recouvrement extérieure, quand elle est en nitrure et déposée à l'aide d'un gaz de travail d'azote réactif, des phases thermodynamiquement stables de CrN, AIN et/ou Si₃N₄ à l'interface avec celle-ci. Les bonnes propriétés de la couche de recouvrement extérieure quant à la tenue à la corrosion et à la dureté mécanique de l'empilement peuvent ainsi être encore améliorées.

La couche de base présente de préférence une épaisseur de 5 à 40 nm, notamment 8 à 30 nm ou 10 à 20 nm. La couche essentiellement métallique présente de préférence une épaisseur de 10 à 60 nm, notamment 20 à 40 nm. La couche de recouvrement présente un épaisseur de 2 à 20 nm, notamment 5 à 15 nm.

La couche de recouvrement en diélectrique est surmontée d'une couche fine en métal de titane, ou de silicium. Généralement, cette dernière couche a moins de 10 et plutôt moins de 5 nm d'épaisseur, notamment de 1 à 5 nm d'épaisseur.

La couche de recouvrement, quand elle est choisie à base de Si₃N₄ ou d'AIN, est une couche jouant efficacement le rôle de couche-barrière vis-à-vis de l'oxydation lors d'un traitement à haute thermique. Quand la couche de base est elle aussi à base d'AlN ou Si₃N₄, ces matériaux peuvent en outre offrir une barrière aux alcalins du verre, pour s'opposer à leur diffusion dans le reste de l'empilement en cas de traitement thermique à haute température. C'est aussi le cas pour les couches d'oxyde SiO₂, également apte à barrer la route aux espèces diffusantes du verre du type alcalins comme le sodium.

(Il est de plus à noter que l'invention est particulièrement avantageuse quand le « vitrage» dont il est question comprend un substrat verrier sur lequel on dépose les couches puisque l'empilement selon l'invention peut être « bombable », et/ou « trempable ».

Les systèmes de couches suivant l'invention peuvent être appliqués sur les vitrages comme un revêtement continu suivant les procédés connus de pulvérisation cathodique réactive assistés par un champ magnétique dans des installations industrielles de revêtement en continu. Les vitrages revêtus peuvent ensuite être soumis à un procédé de trempe habituel, sans que l'empilement de couches ne perde de façon significative les propriétés optiques et esthétiques souhaitées. Des effets esthétiques particuliers sont obtenus lorsque l'empilement de couches est appliqué sur des vitrages ornementaux, qu' on appelle des vitrages coulés. De tels vitrages coulés présentent habituellement une surface gaufrée et une surface plane, et il convient d'appliquer le revêtement sur le côté plan.

Des effets particulièrement esthétiques peuvent aussi être obtenus lorsque, pour réaliser l'invention, l'empilement de couches réfléchissant est appliqué sur la surface du verre sous la forme d'un revêtement discontinu à la manière d'un décor ou d'une trame (ou sous forme d'un revêtement continu ultérieurement gravé). On peut ainsi créer des trames ou des décors, en recouvrant les vitrages par saupoudrage à travers des masques adéquats qui ne laissent libres que les zones des surfaces à revêtir. Des masques en tôles perforées peuvent par exemple être utilisés pour recouvrir les vitrages. Dans les zones marginales floues .de tels décors ou trames qui font suite au procédé, les couches sont particulièrement fragiles, mais il a été montré que les empilements de couches suivant l'invention étaient suffisamment stables, même dans ces zones marginales.

Après le dépôt de l'empilement de couches suivant l'invention, on peut appliquer une couche supplémentaire, par exemple une couche de couleur continue notamment opaque, sur le côté revêtu, éventuellement dans un but esthétique ou pour fabriquer des vitrages opaques du type allège. Cette couche de couleur opaque recouvre les zones du vitrage exemptes de l'empilement de couches. Cette couche peut être en émail, obtenu par cuisson d'une composition d'émaillage de façon connue. Dans ce cas, on peut avantageusement lier l'opération de cuisson à l'opération de recuit, bombage ou trempe du substrat verrier porteur de l'empilement. Les deux opérations peuvent ainsi être concomitantes.

Ci-après trois exemples d'empilement :
1) (substrat) - SiO₂ - CrAl - Si₃N₄
2) (substrat) - Si₃N₄ - Cr - Si₃N₄ - Si ou Ti (selon l'invention)
3) (substrat) - Si₃N₄- Cr - Si

Des exemples de réalisation et des exemples comparatifs seront décrits ci-dessous en détails avec leurs résultats aux tests suivants. Le test de "l'eau de condensation" suivant la norme DIN 50017, le test "brouillard salin" suivant la norme DIN 50021 et le test "Cass" également suivant la norme DIN 50021 sont réalisés pour l'évaluation de la résistance à la corrosion. L'évaluation de la résistance de l'empilement de couches à l'abrasion, c'est-à-dire sa résistance mécanique, s'effectue par un test d'abrasion Taber modifié. Suivant ce test, un galet de friction lesté roule en cercle sur l'échantillon. Les rayures engendrées de cette façon dans la couche sont évaluées microscopiquement après des cycles de rotation prédéterminés, la fraction de couche détruite par les rayures étant rapportée en pourcentage d'augmentation de la transmission. La mesure de la transmission du système de couche dans la zone spectrale du visible T_{L}, de la réflexion dans la zone spectrale du visible R_{L} (selon l'illuminant D65) tout comme les coordonnées des couleurs a* et b* selon le système de colorimètre (L, a*, b*) pour la détermination des couleurs de réflexion s'effectuent dans chaque cas suivant la norme DIN 5033.

### Exemple de réalisation 1 (hors invention)

Sur une installation industrielle de revêtement sous vide, des vitrages en verre flotté de 6 mm d'épaisseur avec des surfaces de 6 x 3,21 m² sont revêtus suivant le procédé de pulvérisation cathodique assistée par un champ magnétique, avec l'empilement de couches suivant :
Verre - 10 nm SiO₂ - 30 nm CrA125 - 6 nm Si₃N₄

La couche de SiO₂ est pulvérisée en mode DMS (mode Dual-Magnetron-Sputter), procédé par exemple du type de celui décrit dans le brevet US-5, 169, 509 avec deux cathodes et un courant alternatif sous atmosphère réactive à partir d'une cible à Si avec un gaz de travail composé d'Ar/O₂, et la couche de Si₃N₄ sous atmosphère réactive à partir d'une cible à Si avec un gaz de travail composé d'Ar/N₂. La couche de CrAl est pulvérisée avec une cathode à courant continu à partir d'une cible CrAl, c'est-à-dire un alliage CrAl contenant 25% en poids d'Al.

Une partie des vitrages revêtus est immédiatement soumise auxdits tests. Une autre partie des vitrages revêtus est trempée thermiquement dans une installation industrielle de trempe, les vitrages revêtus y étant réchauffés à une température d'environ 650°C et brusquement refroidis par soufflage d'air froid.

Les résultats des tests effectués pour l'évaluation des propriétés des couches sont rassemblés dans le tableau I suivant, dans lequel sont rapportés les résultats des tests sur les vitrages revêtus, aussi bien avant le traitement de trempe qu'après le traitement de trempe :

**TABLEAU I**

| | | |
|---|---|---|
| Test réalisé | avant la trempe | après la trempe |
| test eau de condensation | réussi | réussi |
| test brouillard salin | réussi | réussi |
| test Cass | réussi | réussi |
| test d'abrasion de Taber | +5% transmission après 100 rotations | +5% transmission après 200 rotations |
| Transmission de la lumière | | |
| côté couche | 5,71% | 5,07% |
| côté verre | 5,71% | 5,01% |
| Réflexion de la lumière | | |
| côté couche | 50,52% | 50,91% |
| côté verre | 40,71% | 40,77% |
| Coordonnée de couleur a* | | |
| côté couche | -1,33 | -1,97 |
| côté verre | -2,86 | -3,43 |
| Coordonnée de couleur b* | | |
| côté couche | 5,51 | 5,16 |
| côté verre | 2,71 | 3,12 |

Les résultats des tests montrent que la stabilité chimique de la couche, c'est-à-dire sa résistance à la corrosion, n'est pas affectée par le traitement de trempe et par le traitement thermique précédent. La résistance à l'abrasion de la couche est même encore améliorée, car la diminution de transmission à hauteur de 5% n'apparaît qu'après un nombre double de rotations du galet de friction. Du point de vue de l'aspect optique, la couche se présente complètement sans défaut, même après le traitement de trempe. Les valeurs chromatiques a* et b* demeurent remarquablement constantes malgré le traitement de trempe et le traitement thermique. Les mesures de transmission et de réflexion dans le visible sont également suffisamment stables et satisfont aux exigences les plus élevées. Les vitrages revêtus sont résistants aux intempéries et se prêtent de façon excellente à une utilisation comme élément de façade. Le cas échéant, ils peuvent être transformés ultérieurement avec un vitrage non trempé en un vitrage feuilleté, lorsque cela est souhaitable pour des raisons de sécurité.

### Exemple de comparaison.

Sur la même installation de revêtement que celle de l'exemple de réalisation, des vitrages flottés de 6 mm d'épaisseur et de dimensions de 6 x 3,21 m² sont munis d'une couche de siliciure de chrome, laquelle est pulvérisée avec un gaz de travail à l'Ar à partir d'une cible formée d'un alliage CrSi comportant de 15% en poids de Si. L'épaisseur de la couche de CrSi est de 35 nm.

Ces vitrages revêtus sont également trempés thermiquement et les mêmes tests sont réalisés que pour les vitrages revêtus de l'exemple 1 de réalisation, et cela avant et après le traitement de trempe. Les résultats des tests sont repris dans le tableau 2 suivant :

**TABLEAU II**

| | | |
|---|---|---|
| Test réalisé | avant la trempe | après la trempe |
| test eau de condensation | réussi | Réussi |
| test brouillard salin | réussi | Réussi |
| test Cass | réussi | Réussi |
| test d'abrasion de Taber | +5% transmission | ? |
| | après 500 rotations | ? |
| Transmission de la lumière | | |
| côté couche | 5,1% | 7,7% |
| côté verre | 5,4% | 8,1% |
| Réflexion de la lumière | | |
| côté couche | 50,89% | 39,63% |
| côté verre | 40,19% | 37,06% |
| Coordonnée de couleur a* | | |
| côté couche | -1,25 | -1,34 |
| côté verre | -2,8 | -3,26 |
| Coordonnée de couleur b* | | |
| côté couche | 5,09 | 8,79 |
| côté verre | 3,59 | 2,99 |

Les résultats des tests montrent que la couche CrSi est très stable et dure, et est supérieure en tant que telle à une couche de Cr métallique. L'aspect optique de la couche ne présente également pas de défaut après le traitement de trempe. La perception des couleurs est cependant modifiée par le traitement de trempe de la couche, ce qui est particulièrement visible par l'élévation de la valeur de b* côté couche. Le changement de couleur est observable par des points jaunes gênants. Simultanément, la réflexion chute fortement, en particulier côté couche, et la transmission s'accroît. Au total, la couche n'est pas appropriée au vu de l'utilisation recherchée, à cause des modifications de ses propriétés optiques après traitement thermique.

D'autres exemples peuvent illustrer l'invention. Ainsi, selon une première variante (toutes épaisseurs en nm), on peut aussi avoir l'empilement suivant :
Substrat (verre) - Si3N4 (10 - 20) - Cr (35 - 40) - Si3N4 (3) - Si (3)
Selon une deuxième variante, on peut avoir :
Substrat - Si3N4 (10 - 20) - Cr (35 - 40) - Si3N4 (4) - Ti (1-2)
Selon une troisième variante non comprise dans l'invention, on peut avoir :
Substrat - Si3N4 (10 - 20) - Cr (35 - 40) - Si (3-4)
Cette dernière variante 3 a été testée dans les conditions de laboratoire avec succès.

Les avantages technologiques importants de l'invention, et tout particulièrement de cette troisième variante, peuvent être résumées de la façon suivante :

La production d'une couche de base en Si₃N₄ crée moins de dépôts dans la chambre mise sous vide ; en outre elle protège la couche métallique de la diffusion d'espèces provenant du verre d'une façon améliorée par rapport à une couche en SiO₂.

La couche supérieure ("overcoat") métallique ou en silicium, (Si ou Ti) permet à l'empilement de mieux supporter des traitements post-dépôts des substrats du type meulage, perçage, lavage.

Cette couche supérieure étant oxydée pendant la trempe du vitrage (Ti se transformant au moins partiellement en TiO₂, et Si en SiO₂), il a été montré que la dureté d'une telle couche trempée était quatre fois élevée, et pouvait même être était plus élevée que la dureté des couches pyrolysées.

### Exemple de réalisation 2 (hors invention) (selon la variante 3)

Sur une installation industrielle de revêtement sous vide, des vitrages en verre flotté de 6 mm d'épaisseur avec des surfaces de 6 x 3,21 m² sont revêtus, suivant le procédé de pulvérisation cathodique combiné DC et DMS assistée par un champ magnétique avec le système de couches suivant : Verre - 15 nm Si₃N₄ - 35 nm Cr - 4 nm Si

La couche de Si₃N₄ est pulvérisée en mode DMS (mode Dual-Magnetron-Sputter) sous forme réactive à partir d'une cible à Si avec un gaz de travail composé d'Ar/N₂.

La couche de Cr est pulvérisée avec une cathode à courant continu à partir d'une cible Cr, la couche de Si est pulverisée avec une cathode à courant continu à partir d'une cible Si.

Les vitrages revêtus sont trempés thermiquement dans une installation industrielle de trempe, les vitrages revêtus y étant réchauffés à une température d'environ 650°C et brusquement refroidis par soufflage d'air froid. La sur-couche de Si est oxydée pendant le réchauffement en SiO₂.

Les résultats des tests effectués pour l'évaluation des propriétés des couches sont rassemblés dans le tableau III suivant, dans lequel sont rapportés les résultats des tests sur les vitrages revêtus après le traitement de trempe :

**TABLEAU III**

| | | |
|---|---|---|
| Test réalisé | | après la trempe |
| test eau de condensation | | réussi |
| test brouillard salin | | réussi |
| test Cass | | réussi |
| test d'abrasion de Taber | | +5% transmission après 500 rotations |
| Transmission de la lumière | | |
| côté couche | 1,44 % | 3,5 % |
| côté verre | 1,44 % | 3,5 % |
| Réflexion de la lumière | | |
| côté couche | 49,28% | 55,01% |
| côté verre | 48,7 % | 44,9 % |
| Coordonnée de couleur a* | | |
| côté couche | 0,53 | -0,59 |
| côté verre | -2,68 | -2,87 |
| Coordonnée de couleur b* | | |
| côté couche | 3,46 | 2,62 |
| côté verre | -0,09 | 0,38 |

Après trempe, l'empilement des couches présente une bonne qualité optique et une dureté élevée. Il est avantageux de régler l'épaisseur de la sur-couche en Si à environ 4 nm. Si l'épaisseur est inférieure de 25 %, la couche Cr peut être oxydée. Si l'épaisseur est choisie supérieure à 4 nm, la couleur en réflexion de la couche semble être légèrement jaune parce que le Si est alors oxydé incomplètement.
De manière générale, on préfère donc choisir les épaisseurs des dernières couches en Si ou en Ti de façon à ce qu'après trempe elles soient complètement oxydées, sans que l'oxydation n'altère la couche métallique réfléchissante sous-jacente. (Ici, la sur-couche en Si se substitue à la sur-couche en Si3N4 du 1^{er} exemple selon l'invention).

Les résultats sont aussi bons que ceux du premier exemple de réalisation selon l'invention.

Les vitrages revêtus sont résistants aux intempéries et se prêtent de façon excellente à une utilisation comme élément de façade. Le cas échéant, ils peuvent être transformés ultérieurement avec un vitrage non trempé en un vitrage feuilleté, lorsque cela est souhaitable pour des raisons de sécurité.

### Exemple de réalisation 3 selon l'invention (selon la variante 1)

Sur la même installation et sur des substrats équivalents la multicouche suivante est réalisée : Verre - 15 nm Si₃N₄ - 35 nm Cr - 3 nm Si₃N₄ - 3 nm Si, où le Si est, après la trempe, oxydé en SiO₂.

Les résultats des tests effectués pour l'évaluation des propriétés des couches sont rassemblés dans le tableau 4 suivant, dans lequel sont rapportés les résultats des tests sur les vitrages revêtus après le traitement de trempe :

**TABLEAU 4**

| | | |
|---|---|---|
| Test réalisé | avant la trempe | après la trempe |
| test eau de condensation | | réussi |
| test brouillard salin | | réussi |
| test Cass | | réussi |
| test d'abrasion de Taber | | +5% transmission après 400 rotations |
| Transmission de la lumière | | |
| côté couche | 2,5 % | 4, 95 % |
| côté verre | 2,5 % | 4,95 % |
| Réflexion de la lumière | | |
| côté couche | 58,05 % | 57,5 % |
| côté verre | 49,4 % | 45,9 % |
| Coordonnée de couleur a* | | |
| côté couche | -0,26 | -0,84 |
| côté verre | -2,85 | -3,3 |
| Coordonnée de couleur b* | | |
| côté couche | 3,07 | 3,18 |
| côté verre | -0,12 | 0,12 |

La qualité de l'empilement des couches trempé est visuellement satisfaisante. Une sur- ou sous oxydation de la couche en Si ne pose pas de problèmes ici parce que la couche de recouvrement en Si₃N₄ au-dessus de la couche fonctionnelle en chrome forme une barrière inerte : on peut donc envisager des couches un peu plus épaisses ou un peu plus minces.

### Exemple de réalisation 4 selon l'invention (selon la variante 2)

Sur la même installation et sur des substrats équivalents encore une autre multicouche est réalisée : Verre - 15 nm Si₃N₄ - 35 nm Cr - 3 nm Si₃N₄ - 3 nm Ti, où le Ti est, après la trempe, oxydé en TiO₂.

Les résultats des tests effectués pour l'évaluation des propriétés des couches sont rassemblés dans le tableau 5 suivant, dans lequel sont rapportés les résultats des tests sur les vitrages revêtus après le traitement de trempe :

**TABLEAU 5**

| | | |
|---|---|---|
| Test réalisé | avant la trempe | après la trempe |
| test eau de condensation | | réussi |
| test brouillard salin | | réussi |
| test Cass | | réussi |
| test d'abrasion de Taber | | +5% transmission après 300 rotations |
| Transmission de la lumière | | |
| côté couche | 2,6 % | 3,5 % |
| côté verre | 2,6 % | 3,5 % |
| Réflexion de la lumière | | |
| côté couche | 57,5% | 58,0% |
| côté verre | 48,4 % | 45,5% |
| Coordonnée de couleur a* | | |
| côté couche | -0,32 | -0,20 |
| côté verre | -2,05 | -2,93 |
| Coordonnée de couleur b* | | |
| côté couche | 3,0 | 2,0 |
| côté verre | -0,32 | 0,12 |

La dureté vis-à-vis de l'abrasion de cet empilement de couches après trempe est sensiblement meilleure que celle d'un empilement avec seulement une sur-couche en Si₃N₄. L'empilement ne pose pas de problèmes mécaniques pendant le traitement du vitrage ni avant ni après la trempe : la deuxième sur-couche en Si selon l'exemple 3 ou en Ti selon l'exemple 4 apporte donc un gain notable en dureté mécanique pour l'ensemble de l'empilement, bien qu'elle soit optionnelle.

Le substrat muni de l'empilement de couches est de préférence en verre, et peut être utilisé comme vitrage monolithique ou incorporé dans une structure de vitrage feuilleté ou de vitrage multiple isolant. Il peut rester transparent ou être opacifié, et être continu ou présenter des motifs. En particulier, le vitrage muni de l'empilement de couches est feuilleté à un vitrage non revêtu, de préférence non trempé, par l'intermédiaire d'une couche adhésive transparente

## Revendications

1. Vitrage muni d'un empilement de couches réfléchissant métallique apte à supporter un traitement thermique, notamment du type recuit, bombage, trempe, et comportant une couche de base en diélectrique, une couche métallique réfléchissante et une couche de recouvrement extérieure en diélectrique, ***caractérisé en ce que*** a couche de base est à base de SiO₂, Al₂O₃, SiON, Si₃N₄, AlN ou d'un mélange d'au moins deux de ces matériaux *en ce que* la couche métallique réfléchissante est en chrome Cr où en un alliage CrAl comportant 20-25% en poids d'Al, ou en un alliage CrSi comportant 15-55% en poids de Si, ou en un alliage CrAlSi comportant 70-80% en poids de Cr, ou en un alliage AlSi comportant de préférence 10-25% en poids de Si, ***en ce que*** la couche de recouvrement extérieure est a base de nitrure choisi parmi le Si₃N₄, l'AlN ou le mélange de ces deux matériaux, les valeurs chromatiques a*, b* desdites couches dudit empilement demeurant sensiblement constantes malgré ledit traitement thermique, *et **en ce que*** la couche de recouvrement en diélectrique est surmontée d'une couche de métal du type titane ou de silicium, notamment de moins de 10 nm d'épaisseur, de préférence entre 1 et 5 nm d'épaisseur.

2. Vitrage selon la revendication 1, ***caractérisé en ce que*** la couche de base présenté une épaisseur de 5 à 40 nm, notamment de 8 à 30 nm et de préférence de 10 à 20 nm.

3. Vitrage selon la revendication 1 ou la revendication 2 ***caractérisé en ce que*** la couche métallique présente une épaisseur de 10 à 60 nm, notamment de 20 à 40 nm.

4. Vitrage selon l'une des revendications précédentes ***caractérisé en ce que*** la couche de recouvrement présente une épaisseur de 2 à 20 nm, notamment de 5 à 15 nm.

5. Vitrage selon l'une des revendications 1 à 4 **caractérisé par** l'empilement de couches suivantes :
Si₃N₄-Cr-Si₃N₄-Si ou Ti

6. Vitrage selon l'une des revendications précédentes, ***caractérisé en ce que*** l'empilement de couches est appliqué sur le vitrage sous la forme d'un revêtement continu.

7. Vitrage selon l'une des revendications 1 à 7, ***caractérisé en ce que*** l'empilement de couches est sous forme d'un revêtement discontinu, du type décor ou trame.

8. Vitrage selon l'une des revendications précédentes, ***caractérisé en ce que***, sur l'empilement de couches réfléchissant, est disposée au moins une couche de couleur opaque, recouvrant les zones du vitrage exemptes de l'empilement de couches.

9. Vitrage selon l'une des revendications précédentes, ***caractérisé en ce qu'**il* est recuit, bombé et/ou trempé thermiquement.

10. Vitrage selon l'une des revendications 8 et 9, ***caractérisé en ce que*** la couche de couleur disposée sur l'empilement de couches réfléchissant est constituée d'une composition d'émaillage, qui est cuite au cours du chauffage nécessaire à la trempe.

11. Vitrage selon l'une des revendications, précédentes, ***caractérisé en ce qu'**il* est feuilleté à un vitrage non revêtu, de préférence non trempé, par l'intermédiaire d'une couche adhésive transparente.

## Claims

1. Glazing pane provided with a stack of metallic reflective layers able to withstand heat treatment, in particular of the annealing, curving and toughening type, and comprising a dielectric base layer, a reflective metallic layer and a dielectric external covering layer, **characterised in that** the base layer is based on SiO₂, Al₂O₃, SiON, Si₃N₄, AlN or a mixture of at least two of these materials, **in that** the reflective metallic layer is chromium Cr or an alloy CrAl comprising 20-25% by weight Al, or a CrSi alloy comprising 15-55% by weight Si or a CrAlSi alloy comprising 70-80% by weight Cr, or an AlSi alloy preferably comprising 10-25% by weight Si, **in that** the external covering layer is based on a chosen nitride Si₃N₄, AlN or a mixture of these two materials, the chromatic values a*, b* of the said layers in the said stack remaining substantially constant despite their heat treatment, and **in that** the dielectric covering layer is surmounted by a metal layer of the titanium or silicon type, in particular with a thickness of less than 10 nm, preferably between 1 and 5 nm thick.

2. Glazing pane according to Claim 1 **characterised in that** the base layer has a thickness of 5 to 40 nm, in particular 8 to 30 nm and preferably 10 to 20 nm.

3. Glazing pane according to Claim 1 or Claim 2, **characterised in that** the metallic layer has a thickness of 10 to 60 nm, in particular 20 to 40 nm.

4. Glazing pane according to one of the preceding claims, **characterised in that** the covering layer has a thickness of 2 to 20 nm, in particular 5 to 15 nm.

5. Glazing pane according to one of the preceding claims, **characterised by** the following stack of layers:
Si₃N₄ - Cr - Si₃N₄ - Si or Ti

6. Glazing pane according to one of the preceding claims **characterised in that** the stack of layers is applied to the glazing pane in the form of a continuous coating.

7. Glazing pane according to one of Claims 1 to 6, **characterised in that** the stack of layers is in the form of a discontinuous coating, of the decoration or framework type.

8. Glazing pane according to one of the preceding claims, **characterised in that**, on the stack of reflective layers, there is disposed at least one layer of opaque colour covering the areas of the glazing pane free from the stack of layers.

9. Glazing pane according to one of the preceding claims **characterised in that** it is annealed, curved and/or toughened thermally.

10. Glazing pane according to one of Claims 8 and 9 **characterised in that** the layer of colour disposed on the stack of reflective layers consists of a composition of enamelling, which is baked during the heating necessary for the toughening.

11. Glazing pane according to one of the preceding claims **characterised in that** it is laminated on a non-coated, preferably non-toughened, glazing pane by means of a transparent adhesive layer.

## Patentansprüche

1. Glasscheibe, die mit einem reflektierenden metallischen Schichtsystem ausgestattet ist, das geeignet ist, einer Wärmebehandlung, insbesondere vom Typ Tempern, Biegen, Vorspannen standzuhalten und das eine Grundschicht aus einem Dielektrikum, eine reflektierende Metallschicht sowie eine äußere Deckschicht aus einem Dielektrikum umfasst, **dadurch gekennzeichnet, dass** die Grundschicht auf der Basis von SiO₂, Al₂O₃, SiON, Si₃N₄, AlN oder eines Gemischs aus wenigstens zwei dieser Materialien besteht, dass die reflektierende Metallschicht aus Chrom Cr oder aus einer CrAl-Legierung mit 20 bis 25 Gew.-% Al oder aus einer CrSi-Legierung mit 15 bis 55 Gew.-% Si oder aus einer CrAlSi-Legierung mit 70 bis 80 Gew.-% Cr oder aus einer AlSi-Legierung mit vorzugsweise 10 bis 25 Gew.-% Si besteht, dass die äußere Deckschicht auf der Basis von Nitrid, ausgewählt aus Si₃N₄, AlN oder dem Gemisch aus diesen beiden Materialien besteht, wobei die Farbwerte a*, b* der Schichten des Systems trotz der Wärmebehandlung im Wesentlichen konstant bleiben, und dass auf der Deckschicht aus einem Dielektrikum eine Schicht aus Metall vom Typ Titan oder Silizium, insbesondere mit einer Dicke von weniger als 10 nm, vorzugsweise mit einer Dicke zwischen 1 und 5 nm angeordnet ist.

2. Glasscheibe nach Anspruch 1, **dadurch gekennzeichnet, dass** die Grundschicht eine Dicke von 5 bis 40 nm, insbesondere von 8 bis 30 nm und vorzugsweise von 10 bis 20 nm aufweist.

3. Glasscheibe nach Anspruch 1 oder Anspruch 2, **dadurch gekennzeichnet, dass** die Metallschicht eine Dicke von 10 bis 60 nm, insbesondere von 20 bis 40 nm aufweist.

4. Glasscheibe nach einem der vorstehenden Ansprüche, **dadurch gekennzeichnet, dass** die Deckschicht eine Dicke von 2 bis 20 nm, insbesondere von 5 bis 15 nm aufweist.

5. Glasscheibe nach einem der Ansprüche 1 bis 4, **gekennzeichnet durch** das System aus folgenden Schichten: Si₃N₄ - Cr - Si₃N₄ - Si oder Ti.

6. Glasscheibe nach einem der vorstehenden Ansprüche, **dadurch gekennzeichnet, dass** das Schichtsystem in Form einer kontinuierlichen Beschichtung auf die Glasscheibe aufgebracht ist.

7. Glasscheibe nach einem der Ansprüche 1 bis 7, **dadurch gekennzeichnet, dass** das Schichtsystem in Form einer diskontinuierlichen Beschichtung vom Typ Dekor oder Raster vorliegt.

8. Glasscheibe nach einem der vorstehenden Ansprüche, **dadurch gekennzeichnet, dass** auf dem reflektierenden Schichtsystem wenigstens eine opake Farbschicht, welche die schichtsystemfreien Bereiche der Glasscheibe bedeckt, angeordnet ist.

9. Glasscheibe nach einem der vorstehenden Ansprüche, **dadurch gekennzeichnet, dass** sie getempert, gebogen und/oder thermisch vorgespannt ist.

10. Glasscheibe nach einem der Ansprüche 8 und 9, **dadurch gekennzeichnet, dass** die auf dem reflektierenden Schichtsystem angeordnete Farbschicht von einer Emaillierzusammensetzung gebildet ist, die im Laufe des für das Vorspannen erforderlichen Erhitzens eingebrannt wird.

11. Glasscheibe nach einem der vorstehenden Ansprüche, **dadurch gekennzeichnet, dass** sie mit Hilfe einer transparenten Klebeschicht mit einer unbeschichteten, vorzugsweise nicht vorgespannten Glasscheibe verbunden ist.
